# EUROPÄISCHE PATENTANMELDUNG

(11) **EP 3 023 592 A1**
(43) Veröffentlichungstag der Anmeldung: **25.05.2016**
(21) Anmeldenummer: 14194073.4
(22) Anmeldetag: 20.11.2014
(51) Int. Cl.: F01D 9/02, F04D 29/54, F23R 3/04

(54) **Diffusor einer thermischen Energiemaschine sowie thermische Energiemaschine**

(71) Anmelder: Siemens Aktiengesellschaft, 80333 München (DE)
(72) Erfinder: Fuchs, Florian, 12059 Berlin (DE); Hecklau, Martin, 10829 Berlin (DE); Herzog, Nils, 10717 Berlin (DE); Mavrommatis, Philippos Theodoros, 12045 Berlin (DE); Mutke, Stefan, 10961 Berlin (DE); Mühl, Julia, 10439 Berlin (DE); Pruss, Matthias, 10318 Berlin-Lichtenberg (DE); Reckert, Rafael, 13127 Berlin (DE); Speiser, Julian, 12435 Berlin (DE); Wohltat, Rene, 14542 Werder (DE)

(57) **Zusammenfassung**

Die Erfindung betrifft einen Diffusor (1) einer thermischen Energiemaschine (3), insbesondere einer Gasturbine (5), mit einem Diffusoreintritt (20), mit einem Diffusoraustritt (22) und mit einer Vielzahl an Luftleitelementen (23), bei welchem ein Luftmassenstrom durch den Diffusoreintritt (20) hindurch in den Diffusor (1) hinein gelangt, und bei welchem der in den Diffusor (1) gelangte Luftmassenstrom durch den Diffusoraustritt (22) wieder aus dem Diffusor (1) hinaus gelangt und hierbei mittels der Luftleitelemente (23) als eine Vielzahl an Luftmassenpartialströmen (24) abströmt, wobei wenigstens zwei unmittelbar benachbarte Luftleitelemente (23) der Vielzahl an Luftleitelementen (23) derart ausgestaltet sind, dass deren Abströmwinkel αₙ bezogen auf die durch die in Umfangsrichtung (25) umlaufende Austrittsöffnung (31) des Diffusoraustritts (22) ausgestaltete Umfangsfläche (32) voneinander verschieden sind.

## Beschreibung

Die Erfindung betrifft einen Diffusor einer thermischen Energiemaschine, insbesondere einer Gasturbine, mit einem Diffusoreintritt, mit einem Diffusoraustritt und mit einer Vielzahl an Luftleitelementen, bei welchem ein Luftmassenstrom durch den Diffusoreintritt hindurch in den Diffusor hinein gelangt, und bei welchem der in den Diffusor gelangte Luftmassenstrom durch den Diffusoraustritt wieder aus dem Diffusor hinaus gelangt und hierbei mittels der Luftleitelemente als eine Vielzahl an Luftmassenpartialströmen abströmt.

Die Erfindung betrifft des Weiteren eine thermische Energiemaschine, insbesondere eine Gasturbine, mit einem Verdichter zum Verdichten eines entlang der Maschinenlängsmittelachse in axialer Strömungsrichtung strömenden Luftmassenstroms, mit einem diesem Verdichter axial nachgeschalteten Diffusor und mit zwei sich gegenüberliegenden, radial weiter außen angeordneten Silo-Brennkammern, bei welcher ein durch ein Gehäuse der thermischen Energiemaschine ausgestalteter Diffusoraustrittsbereich radial in zu den Silo-Brennkammern hin führenden Zuströmkanäle derart hinein mündet, dass der aus dem Diffusor austretende Luftmassenstrom mittels des Diffusoraustrittsbereichs in die Zuströmkanäle abströmen kann.

Gattungsgemäße Diffusoren speziell stromab eines Verdichters einer Turbine sind aus dem Stand der Technik hinlänglich bekannt. Die aerodynamischen Eigenschaften dieser Diffusoren werden im Wesentlichen durch die Konturen von Innen- und Außenschale des Diffusors und durch Luftleitbleche an einem Diffusoraustritt, aber auch insbesondere durch die Leitschaufelreihe der letzten Verdichterstufe eines stromab angeordneten Verdichters beeinflusst.

Durch eine im Wesentlichen radiale Strömungsrichtung des Luftmassenstroms wird unter anderem eine Sekundärströmung mit einer Strömungskomponente in radialer Richtung induziert, welche zu einer kritischen Verblockung des Luftmassenstroms innerhalb des Diffusors und damit auch zu erhöhten Strömungsverlusten bezüglich des Luftmassenstroms führen kann. Ferner kann es zu partiellen Strömungsablösungen kommen, welche zu einer empfindlichen Reduzierung der Verzögerung des Luftmassenstroms am Diffusor und insofern auch zu einem geringeren statischen Druck am Diffusoraustritt führen können.

Es ist Aufgabe der Erfindung, insbesondere die vorstehend genannten Nachteile zu überwinden und zudem die aerodynamische Effizienz von gattungsgemäßen Diffusoren zu steigern.

Die Aufgabe wird von einem Diffusor einer thermischen Energiemaschine, insbesondere einer Gasturbine, mit einem Diffusoreintritt, mit einem Diffusoraustritt und mit einer Vielzahl an Luftleitelementen gelöst, bei welchem ein Luftmassenstrom durch den Diffusoreintritt hindurch in den Diffusor hinein gelangt, und bei welchem der in den Diffusor gelangte Luftmassenstrom durch den Diffusoraustritt wieder aus dem Diffusor hinaus gelangt und hierbei mittels der Luftleitelemente als eine Vielzahl an Luftmassenpartialströmen abströmt, wobei wenigstens zwei unmittelbar benachbarte Luftleitelemente derart ausgestaltet sind, dass deren Abströmwinkel αₙ bezogen auf die durch die in Umfangsrichtung umlaufende Austrittsöffnung des Diffusoraustritts ausgestaltete Umfangsfläche voneinander verschieden sind.

Jedem der Luftleitelemente wohnt durch seine Gestalt ein Abströmwinkel αₙ inne, mit welchem ein durch das jeweilige Luftleitelement erzeugter Luftmassenpartialstrom von diesem Luftleitelement abströmt.

Bisher sind diese den Luftleitelementen innewohnende Abströmwinkel - bezogen auf die im Sinne der Erfindung formulierte Umfangsfläche - für alle Luftleitelemente gleich, so dass die Luftmassenpartialströmen nach radial außen gleich abströmen, unabhängig davon, an welcher Umfangslage sie platziert sind. Insofern strömen die Luftmassenpartialströme bisher nur undifferenziert von dem Diffusor ab, so dass die meisten der Luftmassenpartialströme beispielsweise Mündungsöffnungen von Zuströmkanälen von Silo-Brennkammern uneffektiv zugeleitet werden können.

Speziell dieser Nachteil ist vorliegend behoben bzw. zumindest stark abgeschwächt.

Die Anzahl an benachbarten Luftleitelementen mit unterschiedlichen Abströmwinkeln kann vorliegend verschieden sein und hängt im Wesentlichen auch von dem Design des Diffusors oder dergleichen ab.

Insofern können auch nur ausgewählte Luftleitelemente im Sinne der Erfindung manipuliert werden, um die vorliegenden gewünschten Effekte erzielen zu können.

Im Sinne der Erfindung beziehen sich die Abströmwinkel αₙ auf die Umfangsfläche, welche durch die in Umfangsrichtung umlaufende Austrittsöffnung des Diffusoraustritts ausgestaltet ist.

Diese Umfangsfläche ist hierbei durch die gebogene und sich in Umfangsrichtung des Diffusors erstreckende Austrittsöffnung des Diffusoraustritts aufgespannt.

Der Begriff "thermische Energiemaschine" betrifft im Sinne der Erfindung im Wesentlichen eine Turbine und insbesondere eine Gasturbine. Insofern werden die Begriffe "thermische Energiemaschine" und "Turbine" vorliegend synonym verwendet.

Die zwei unmittelbar benachbarten Luftleitelemente sind hierbei in Umfangsrichtung des Diffusoraustritts direkt nebeneinander bevorzugt an dem Diffusoraustritt des Diffusors, oder alternativ unmittelbar hinter dem Diffusoraustritt in einem Diffusoraustrittsbereich einer thermischen Energiemaschine bzw. einer Turbine angeordnet.

Es versteht sich, dass die vorliegenden Luftleitelemente unterschiedlich ausgestaltet sein können. Beispielsweise weist ein Luftleitelement einen Blechkörper auf, welcher einen im Sinne der Erfindung vorteilhaften Abströmwinkel αₙ formuliert.

Ein solcher gewünschter Abströmwinkel αₙ kann konstruktiv besonders einfach beispielsweise durch einen am Diffusoraustritt geeignet gewählten Neigungswinkel des Blechkörpers bzw. des jeweiligen Luftleitelements erzielt werden. Hierbei können vorteilhafterweise gleich gestaltete bzw. identische Luftleitelemente verwendet werden, wodurch eine kostengünstige Herstellung erreicht werden kann.

Kumulativ oder alternativ können auch Luftleitelemente mit unterschiedlich geformten und gerichteten Luftleitflächen verwendet werden, um die vorliegenden Effekte erzielen oder verstärken zu können. Hierdurch verkompliziert sich jedoch die Herstellung und Montage der einzelnen unterschiedlichen Luftleitelemente.

Vorliegend kann die Anzahl der vorgesehenen Luftleitelemente nahezu beliebig gewählt werden, wobei die Abströmwinkel und/oder die Neigungswinkel der Luftleitelemente, insbesondere von wenigstens zwei unmittelbar benachbarten Luftleitelementen, in Abhängigkeit von der Anzahl der an dem Diffusoraustritt angeordneten Luftleitelemente gewählt sein können.

Beispielsweise sind 48 solcher Luftleitelemente an dem Umfang des Diffusoraustritts verteilt angeordnet.

Die vorliegenden Luftleitelemente sind in Umfangsrichtung des Diffusoraustritts nebeneinander und damit auch im Wesentlichen konzentrisch um eine Maschinenlängsmittelachse einer thermischen Energiemaschine bzw. eines Verdichters der thermischen Energiemaschine herum angeordnet.

An dieser Stelle sei noch erwähnt, dass die Begrifflichkeit "unmittelbar" im Sinne der Erfindung bezogen auf die Luftleitelemente, zwei direkt nebeneinander angeordnete Luftleitelemente beschreibt, zwischen welchen kein weiteres der Luftleitelemente angeordnet ist. Im Gegensatz hierzu beschreibt die Begrifflichkeit "mittelbar" vorliegend benachbarte Luftleitelementen, zwischen denen ein oder mehrere Luftleitelemente angeordnet sind.

Jedenfalls können die durch die Vielzahl an Luftleitelementen erzeugten Luftmassenpartialströme vorliegend mit unterschiedlichen Abströmwinkeln von dem Diffusoraustritt abströmen, wodurch alle erzeugten Luftmassenpartialströme vorteilhafter, insbesondere mit günstigeren Vorzugsrichtungen, etwa in Richtung von Zuströmkanäle von radial weiter außen angeordneten Silo-Brennkammern oder dergleichen, abströmen können.

Insbesondere sind die Abströmwinkel der Luftmassenpartialströme derart von den einzelnen Luftleitelementen vorgegeben, dass eine diesbezüglich direktere Anströmung der Zuströmkanäle erfolgt.

Insofern wird die Aufgabe der Erfindung auch von einer thermischen Energiemaschine, insbesondere einer Gasturbine, mit einem Verdichter zum Verdichten eines entlang der Maschinenlängsmittelachse in axialer Strömungsrichtung strömenden Luftmassenstroms, mit einem diesem Verdichter axial nachgeschalteten Diffusor und mit zwei sich gegenüberliegenden, radial weiter außen angeordneten Silo-Brennkammern gelöst, bei welcher ein durch ein Gehäuse der thermischen Energiemaschine ausgestalteter Diffusoraustrittsbereich radial in zu den Silo-Brennkammern hin führenden Zuströmkanäle derart hinein mündet, dass der aus dem Diffusor austretende Luftmassenstrom mittels des Diffusoraustrittsbereichs in die Zuströmkanäle abströmen kann, wobei die thermische Energiemaschine sich durch den hier beschriebenen Diffusor auszeichnet, welcher nach einer der hier beschriebenen Merkmalskombination ausgestaltet sein kann.

Hierdurch kann der Diffusoraustritt an der thermischen Energiemaschine, insbesondere an der Gasturbine, derart ausgestaltet werden, dass insbesondere die Zuströmkanäle der Silo-Brennkammern direkter und definierter durch die Luftmassenpartialströme angeströmt werden können.

Eine durch den vorliegenden Diffusor ausgerüstete thermische Energiemaschine bzw. Turbine kann somit wesentlich effektiver betrieben werden.

Eine bevorzugte Ausführungsvariante sieht vor, dass zwei unmittelbar benachbarte Luftleitelemente mit unterschiedlichen Neigungswinkeln gegenüber der Umfangsfläche geneigt angeordnet sind.

Hierdurch können die jeweils durch die unterschiedlich gegenüber der Umfangsfläche geneigten Luftleitelemente erzeugten Luftmassenpartialströme individueller abströmen.

Gleiches gilt, wenn zwei unmittelbar benachbart zu einem gemeinsam benachbarten Luftleitelement angeordnete Luftleitelemente unterschiedlich stark geneigt gegenüber diesem gemeinsamen unmittelbar benachbarten Luftleitelement angeordnet sind.

Das gemeinsame Luftleitelement ist hierbei zwischen den beiden hierzu unmittelbar benachbarten Luftleitelementen angeordnet, wobei diese Luftleitelemente in Umfangsrichtung des Diffusoraustritts nebeneinander platziert sind.

Erzeugen die Luftleitelemente, insbesondere zwei unmittelbar benachbarte Luftleitelemente, relativ zu der Umfangsfläche, welche durch die im Wesentlichen konzentrisch um eine Maschinenlängsmittelachse des Diffusors herum verlaufende Austrittsöffnung des Diffusoraustritts aufgespannt ist, unterschiedliche Abströmwinkel, können die Abströmrichtungen der Luftmassenpartialströme individuell vorgegeben werden, um die im Sinne der Erfindung gewünschten Effekte zu erzielen.

Die Vorzugsrichtungen der durch die Luftleitelemente erzeugten Luftmassenpartialströme können noch präziser und effektiver insbesondere an einem Diffusoraustrittsbereich abströmen, wenn in Bezug auf die Umfangsfläche gewählte Neigungswinkel der Luftleitelemente in Abhängigkeit von ihrer jeweiligen Umfangslage an dem Diffusoraustritt gewählt sind.

Beispielsweise weisen von einer Mündungsöffnung eines Zuströmkanals weiter entfernt angeordnete Luftleitbleche bzw. Luftleitelemente einen anderen Neigungswinkel, insbesondere einen spitzeren Neigungswinkel, auf als ein näher an einem solchen Zuströmkanal angeordnetes Luftleitblech bzw. Luftleitelement.

Je nach Ausgestaltung der Erfindung kann es zweckmäßig sein, wenn Abströmwinkel αₙ und/oder Neigungswinkel der Luftleitelemente in Bezug auf eine durch eine Austrittsöffnung des Diffusoraustritts ausgestaltete Umfangsfläche umso kleiner sind, je weiter das jeweilige Luftleitelement von einer Mündungsöffnung eines Zuströmkanals von Silo-Brennkammern oder dergleichen entfernt angeordnet ist, da hierdurch die partiellen Abströmungen gezielter vorgegeben werden können.

Darüber hinaus ist es vorteilhaft, wenn Abströmwinkel αₙ und/oder Neigungswinkel von benachbarten Luftleitelementen, insbesondere von zwei unmittelbar benachbarten Luftleitelementen, in Abhängigkeit von einem von der letzten Verdichterstufe formulierten Strömungsaustrittswinkel des Luftmassenstroms eines stromauf angeordneten Verdichters gewählt sind.

Einer durch einen Restdrall des aus der letzten Verdichterstufe austretenden Luftmassenstroms gegebenenfalls entstehenden Verblockung des Luftmassenstroms innerhalb des Diffusors kann vorteilhaft dadurch entgegengewirkt werden, dass die Abströmwinkel αₙ und/oder Neigungswinkel der Luftleitelemente in Abhängigkeit von einem von der letzten Verdichterstufe formulierten Strömungsaustrittswinkel des Luftmassenstroms des vorgeschalteten Verdichters gewählt sind.

Im Idealfall können die sich gegenüberliegenden Luftleitelemente in Umfangsrichtung des Diffusoraustritts um 180° versetzt zueinander angeordnet sein. Gegebenenfalls können auch Schieflasten hinsichtlich zweier Silo-Brennkammereinrichtungen einer Gasturbine zur Gänze vermieden oder zumindest signifikant reduziert werden, wenn sich am Diffusoraustritt gegenüberliegende Luftleitelemente nicht den gleichen Abströmwinkel αₙ bzw. nicht den gleichen Neigungswinkel aufweisen.

Insofern ist es vorteilhaft, wenn sich am Diffusoraustritt gegenüberliegende Luftleitelemente voneinander verschiedene Abströmwinkel αₙ bzw. voneinander verschiedene Neigungswinkel aufweisen.

Durch eine individuelle Anpassung der Abströmwinkel αₙ bzw. der Neigungswinkel im Sinne der Erfindung kann eine Aufteilung des Luftmassenstroms präziser erfolgen und somit eine Homogenisierung der Verbrennung an den Silo-Brennkammereinrichtungen erreicht werden.

Jedenfalls können mit der vorliegenden Erfindung die von dem Diffusoraustritt abströmenden Luftmassenpartialströme bereits quasi vorsortiert werden, so dass sie effektiver insbesondere einen Diffusoraustrittsbereich durchströmen können.

Weitere Merkmale, Effekte und Vorteile vorliegender Erfindung werden anhand anliegender Zeichnung und nachfolgender Beschreibung erläutert, in welchen beispielhaft ein Diffusor mit durch unterschiedlich gewählte Neigungswinkel ausgerichteten Luftleitelementen an einer als Turbine ausgestalteten thermischen Energiemaschine dargestellt und beschrieben ist.

In der Zeichnung zeigen:
- Figur 1: schematisch eine quer zu einer Turbinenlängsmittelachse geschnittene Querschnittsansicht eines Diffusors einer Turbine; und
- Figur 2: schematisch eine perspektivische Teilansicht eines Diffusorsegmentes des in der Figur 1 gezeigten Diffusors.

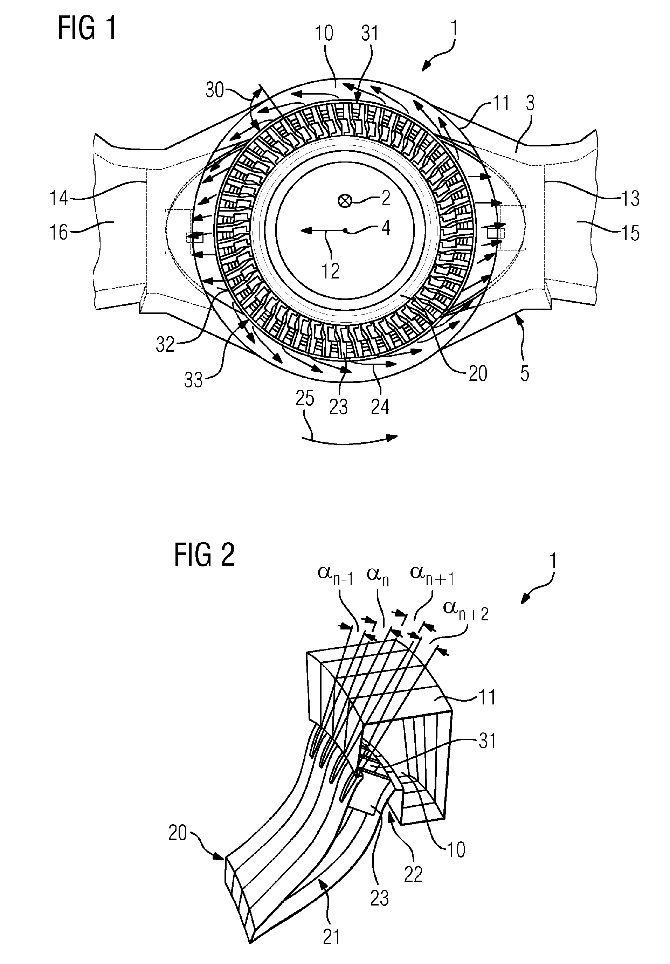

Der in den Figuren 1 und 2 zumindest teilweise gezeigte Diffusor 1 ist stromab, also in axialer Strömungsrichtung 2 gesehen hinter einem hier nicht gezeigten Verdichter einer thermischen Energiemaschine bzw. einer Turbine 3 angeordnet, wobei die axiale Strömungsrichtung 2 mit der Maschinen- bzw. Turbinenlängsmittelachse 4 der Turbine 3 fluchtet.

Bei der Turbine 3 handelt es sich in diesem Ausführungsbeispiel um eine Gasturbine 5, wobei sich die Turbine 3 bzw. die Gasturbine 5 noch durch zwei radial weiter außen angeordnete und nicht dargestellte Silo-Brennkammereinrichtungen mit jeweils einer Silo-Brennkammer (nicht gezeigt) auszeichnet.

Hierbei ist ein stromab hinter dem Diffusor 1 ausgebildeter Diffusoraustrittsbereich 10 zumindest teilweise durch ein Gehäuse 11 der Turbine 3 ausgestaltet, wobei dieser Diffusoraustrittsbereich 10 seitlich und in Bezug auf die Turbinenlängsmittelachse 4 in radialer Richtung 12 (nur beispielhaft eingezeichnet) radial nach außen in jeweils eine Mündungsöffnung 13 bzw. 14 eines Zuströmkanals 15 bzw. 16 hinein mündet, welcher jeweils bis in die entsprechende Silo-Brennkammer führt.

Wie insbesondere auch gemäß der Darstellung nach der Figur 2 gut ersichtlich ist, gelangt ein hier nicht weiter eingezeichneter, den Verdichter in axialer Strömungsrichtung 2 durchströmender Luftmassenstrom durch einen Diffusoreintritt 20 hindurch in den Diffusor 1, durchströmt einen sich aufweitenden Diffusorkanal 21 des Diffusors 1 und strömt anschließend weiter aus einen Diffusoraustritt 22 und dem Diffusoraustrittsbereich 10 zu den Mündungsöffnungen 13 und 14 ab, wobei der abströmende Luftmassenstrom im Bereich des Diffusoraustritts 22 mittels einer Vielzahl an Luftleitelementen 23 (hier nur exemplarisch beziffert) in eine entsprechende Vielzahl an Luftmassenpartialströmen 24 (nur exemplarisch beziffert, siehe Figur 1) aufgeteilt wird.

Die Vielzahl an Luftleitelementen 23 ist in Umfangsrichtung 25 des Diffusoraustritts 22 konzentrisch um die Turbinenlängsmittelachse 4 herum verteilt angeordnet.

Damit die einzelnen Luftmassenpartialströme 24 direkter und optimierter in Richtung der Mündungsöffnungen 13 und 14 abströmen können, sind zumindest einige der Luftleitelemente 23 und insbesondere jeweils zwei unmittelbar benachbarte Luftleitelemente 23 mit einem Neigungswinkel 30 (nur exemplarisch eingetragen) gegenüber einer durch die Austrittsöffnung 31 des Diffusoraustritts 22 aufgespannten Umfangsfläche 32 derart geneigt angeordnet, dass die einzelnen Luftmassenpartialströme 24 direkter und optimierter in Richtung der Mündungsöffnungen 13 und 14 abströmen können.

Kumulativ oder alternativ können Luftleitelemente 23 noch derart unterschiedlich ausgebildet sein, dass die einzelnen Luftmassenpartialströme 24 direkter und optimierter in Richtung der Mündungsöffnungen 13 und 14 oder noch effektiver abströmen können.

Hierbei sind zwei unmittelbar benachbart zu einem gemeinsam benachbarten Luftleitelement 23 angeordnete Luftleitelemente 23 unterschiedlich geneigt zu diesem gemeinsamen unmittelbar benachbarten Luftleitelement 23 angeordnet, so dass bevorzugt jedes der Luftleitelemente 23 in Bezug auf die Umfangsfläche 32 anders geneigt angeordnet ist.

Insofern können die Luftleitelemente 23 bezüglich der vorliegenden Umfangsfläche 32 unterschiedliche Abströmwinkel αₙ erzeugen.

Von einem der Luftleitelemente 23 wird also ein Abströmwinkel αₙ erzeugt, wobei von einem ersten unmittelbar benachbarten Luftleitelemente 23 ein hiervon verschiedener Abströmwinkel αₙ₊₁ und von einem weiteren unmittelbar benachbarten Luftleitelemente 23 ein hiervon verschiedener Abströmwinkel αₙ₋₁ erzeugt wird. Weiter wird von einem ersten mittelbar benachbarten Luftleitelemente 23 ein hiervon verschiedener Abströmwinkel αₙ₊₂ erzeugt usw.

Ferner sind die in Bezug auf die Umfangsfläche 32 gewählte Neigungswinkel 30 der Luftleitelemente 23 in Abhängigkeit von ihrer jeweiligen Umfangslage 33 an dem Diffusoraustritt 22 gewählt, wodurch die einzelnen Luftmassenpartialströme 24 noch zielgerichteter in Richtung der Mündungsöffnungen 13 und 14 abströmen.

Mittels des in der Turbine 2 integrierten und vorstehend beschriebenen Diffusors 1 können die von dem Diffusoraustritt 22 abströmenden Luftmassenpartialströme 24 hinsichtlich ihrer Strömungsrichtung bereits derart gut vorsortiert werden, dass sie effektiver zu den Mündungsöffnungen 13 bzw. 14 hin abströmen können.

Obwohl die Erfindung im Detail durch das bevorzugte Ausführungsbeispiel näher illustriert und beschrieben wurde, so ist die Erfindung nicht durch dieses offenbarte Ausführungsbeispiel eingeschränkt, und andere Variationen können vom Fachmann hieraus abgeleitet werden, ohne den Schutzumfang der Erfindung zu verlassen.

## Patentansprüche

1. Diffusor (1) einer thermischen Energiemaschine (3), insbesondere einer Gasturbine (5), mit einem Diffusoreintritt (20), mit einem Diffusoraustritt (22) und mit einer Vielzahl an Luftleitelementen (23), bei welchem ein Luftmassenstrom durch den Diffusoreintritt (20) hindurch in den Diffusor (1) hinein gelangt, und bei welchem der in den Diffusor (1) gelangte Luftmassenstrom durch den Diffusoraustritt (22) wieder aus dem Diffusor (1) hinaus gelangt und hierbei mittels der Luftleitelemente (23) als eine Vielzahl an Luftmassenpartialströmen (24) abströmt,
wobei wenigstens zwei unmittelbar benachbarte Luftleitelemente (23) der Vielzahl an Luftleitelementen (23) derart ausgestaltet sind, dass deren Abströmwinkel αₙ bezogen auf eine durch die Austrittsöffnung (31) des Diffusoraustritts (22) ausgestaltete Umfangsfläche (32) voneinander verschieden sind.

2. Diffusor (1) nach Anspruch 1,
wobei zwei unmittelbar benachbarte Luftleitelemente (23) mit unterschiedlichen Neigungswinkeln (30) gegenüber der Umfangsfläche (32) geneigt angeordnet sind.

3. Diffusor (1) nach Anspruch 1 oder 2,
wobei zwei unmittelbar benachbart zu einem gemeinsam benachbarten Luftleitelement (23) angeordnete Luftleitelemente (23) unterschiedlich stark geneigt gegenüber diesem gemeinsamen unmittelbar benachbarten Luftleitelement (23) angeordnet sind.

4. Diffusor (1) nach einem der Ansprüche 1 bis 3,
wobei in Bezug auf die Umfangsfläche (32) gewählte Neigungswinkel (30) der Luftleitelemente (23) in Abhängigkeit von ihrer jeweiligen Umfangslage (33) an dem Diffusoraustritt (22) gewählt sind.

5. Diffusor (1) nach einem der Ansprüche 1 bis 4,
wobei Abströmwinkel αₙ und/oder Neigungswinkel (30) von benachbarten Luftleitelementen (23), insbesondere von zwei unmittelbar benachbarten Luftleitelementen (23), in Abhängigkeit von einem von der letzten Verdichterstufe formulierten Strömungsaustrittswinkel des Luftmassenstroms eines stromauf angeordneten Verdichters gewählt sind.

6. Diffusor (1) nach einem der Ansprüche 1 bis 5,
wobei sich am Diffusoraustritt (22) gegenüberliegende Luftleitelemente (23) voneinander verschiedene Abströmwinkel αₙ bzw. voneinander verschiedene Neigungswinkel (30) aufweisen.

7. Thermische Energiemaschine (3), insbesondere Gasturbine (5), mit einem Verdichter zum Verdichten eines entlang der Maschinenlängsmittelachse (4) in axialer Strömungsrichtung (2) strömenden Luftmassenstroms, mit einem diesem Verdichter axial nachgeschalteten Diffusor (1) und mit zwei sich gegenüberliegenden, radial weiter außen angeordneten Silo-Brennkammern, bei welcher ein durch ein Gehäuse (11) der thermischen Energiemaschine (3) ausgestalteter Diffusoraustrittsbereich (10) radial in zu den Silo-Brennkammern hin führenden Zuströmkanäle (15, 16) derart hinein mündet, dass der aus dem Diffusor (1) austretende Luftmassenstrom mittels des Diffusoraustrittsbereichs (10) in die Zuströmkanäle (15, 16) abströmen kann,
wobei die thermische Energiemaschine (3) sich durch einen Diffusor (1) nach einem der vorhergehenden Ansprüche auszeichnet.
